# FASCICULE DE BREVET EUROPEEN

(11) **EP 0 860 636 B1**
(45) Date de publication et mention de la délivrance du brevet: **02.01.2003**
(21) Numéro de dépôt: 98400390.5
(22) Date de dépôt: 18.02.1998
(51) Int. Cl.: F16J 15/12

(54) **Dispositif de liaison étanche entre des canaux**
Dichtverbindung zwischen Fluidbohrungen
Tight connection between conduits

(30) Priorité: 20.02.1997 FR 9702014
(43) Date de publication de la demande: 26.08.1998
(73) Titulaire: HUTCHINSON, 75008 Paris (FR)
(72) Inventeur: Crapart, René, 49500 Ste Gemmes D'Andigne (FR)
(74) Mandataire: Picard, Jean-Claude Georges

(56) Documents cités:
- US-A- 3 570 374

## Description

La présente invention concerne un dispositif de liaison étanche entre des canaux ménagés respectivement dans deux pièces en appui l'une sur l'autre par l'intermédiaire d'au moins une entretoise, cette entretoise étant traversée d'au moins un passage de diamètre supérieur à celui des canaux et propre à mettre en communication un canal d'une des pièces avec un canal de l'autre pièce, aligné avec le précédent ou légèrement décalé par rapport à lui, ce dispositif comprenant au moins un insert tubulaire logé dans chaque passage d'entretoise et une armature tubulaire rigide de longueur légèrement inférieure à l'épaisseur de l'entretoise au niveau du passage concerné.

Il s'agira par exemple de réaliser grâce à ce dispositif la continuité de canaux de passage d'un fluide dans deux pièces séparées par des entretoises. Dans la pratique ce fluide pourra être de l'huile en circulation sous une pression variable, éventuellement de façon pulsatoire, de O à plusieurs dizaines de bars, à température également très variable (- 40 à + 150°C par exemple), les pièces en question pouvant appartenir à des carters, dans une boîte de vitesses automatique.

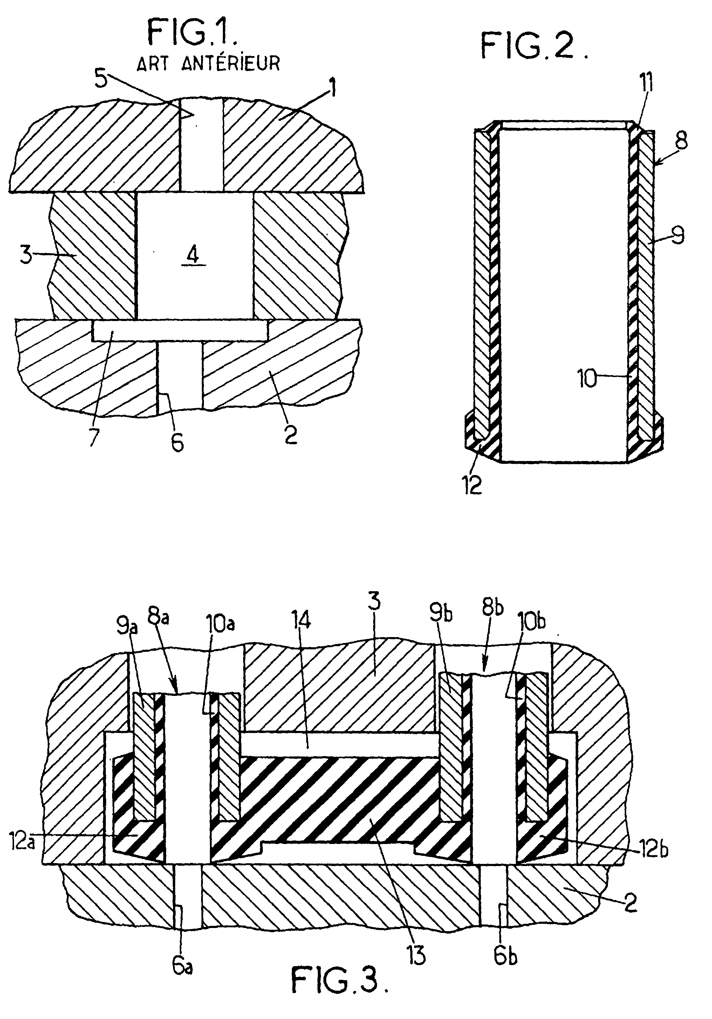

La figure 1 des dessins ci-annexés représente schématiquement un tel dispositif, en coupe par l'axe des canaux. Sur cette figure on a référencé en 1 et 2 deux pièces en appui l'une sur l'autre par l'intermédiaire d'une entretoise 3. Cette entretoise est traversée d'au moins un passage 4 de diamètre supérieur à celui des canaux 5 et 6 ménagés respectivement dans les pièces 1 et 2, passage qui a pour fonction de relier ces canaux l'un à l'autre de façon étanche. Comme on l'a représenté, les canaux 5 et 6 sont légèrement décalés l'un par rapport à l'autre ainsi que par rapport à l'axe du passage 4. Il peut y avoir également, comme cela se rencontre dans la pratique, une importante dispersion des épaisseurs de l'entretoise 3, ainsi que des jeux variables entre elle et les pièces 1 et/ou 2, ce qui empêche de mettre en oeuvre les moyens classiques qui consisteraient à assurer l'étanchéité par l'intermédiaire de joints plats serrés entre l'entretoise 3 d'une part, les pièces 1 et 2 d'autre part.

On peut alors envisager de réaliser l'étanchéité grâce à des inserts tubulaires, par exemple en caoutchouc, comprimés axialement entre les pièces 1 et 2. Si cependant un tel insert ne peut être maintenu extérieurement sur toute sa hauteur par le passage 4 de l'entretoise 3, il y a risque de déformation et même d'éclatement sous l'effet de la pression du fluide qui, comme cela a été noté plus haut, peut être importante et varier en outre de façon pulsatoire; ce cas peut se rencontrer en particulier lorsque l'un des canaux,par exemple le canal 6, débouche dans un lamage 7 de la pièce correspondante 2 (voir brevet US n° 3 570 374), ou lorsqu'il y a un espace entre les pièces 1 et 2 et l'entretoise 3. Même une simple déformation peut rendre de tels inserts tubulaires indémontables et être la cause d'une fuite.

Le but de la présente invention est de résoudre ce problème et à cet effet, un dispositif de liaison étanche conforme à l'invention telle que définie par les caractéristiques de la revendication 1 est prévu. Ce dispositif comprend au moins un tube en caoutchouc ou matière synthétique élastique, revêtant au moins les extrémités de ladite armature et présentant à ses deux extrémités un bourrelet recouvrant l'extrémité correspondante de cette armature, ce bourrelet pouvant ainsi être comprimé, lors du montage, de façon étanche, entre chaque extrémité de l'armature tubulaire et la pièce correspondante.

On comprend alors que l'armature tubulaire rigide extérieure ou intérieure de l'insert empêchera toute déformation sensible, notamment toute dilatation, du tube de caoutchouc intérieur ou extérieur assurant l'étanchéité du passage. Les extrémités de cette armature serviront quant à elles d'appuis pour les bourrelets d'extrémité du tube, comprimés entre les deux pièces et l'entretoise, ce qui maintiendra l'étanchéité aux extrémités de l'insert de liaison.

L'armature tubulaire pourra être avantageusement métallique, réalisée sous forme massive ou encore sous la forme d'une tresse en fils métalliques ou fibres minérales ou synthétiques, dans le cas où elle n'a pas à être soumise à des efforts de compression axiaux.

Dans de nombreux cas il y aura plusieurs canaux de passage, ce qui nécessitera la mise en oeuvre de plusieurs inserts tubulaires. Pour simplifier le montage et éviter des erreurs de positionnement, notamment lorsque les entretoises doivent être de différentes longueurs, il est avantageux de relier ces inserts entre eux.

A cet effet, un dispositif conforme à l'invention pourra encore être caractérisé en ce qu'il comporte un certain nombre d'inserts tubulaires reliés entre eux par des bracelets, lesquels seront alors avantageusement en caoutchouc ou matière synthétique élastique, et moulés d'une pièce avec le tube intérieur ou extérieur desdits inserts.

Selon une autre variante, les inserts peuvent être noyés dans un bloc de caoutchouc ou matière synthétique, leurs extrémités constituant des bourrelets en dépassement sur la surface extrême correspondante dudit bloc.

Selon un autre mode de mise en oeuvre de l'invention, le dispositif pourra encore être caractérisé en ce qu'il comporte un certain nombre d'inserts tubulaires reliés entre eux par une plaque de liaison perforée.

Cette plaque de liaison, par exemple métallique ou en matière plastique rigide, pourra constituer un distributeur amovible, jetable ou récupérable, ou en variante elle pourra constituer un élément intégré, destiné à rester logé à demeure dans ladite entretoise, ce qui présentera les avantages exposés plus bas.

D'autres dispositions de l'invention apparaîtront à la lecture de la description de plusieurs modes d'exécution donnés à titre d'exemples nullement limitatifs avec référence aux autres figures du dessin annexé dans lequel :
- la figure 2 est une vue en coupe axiale d'un insert tubulaire conforme à l'invention ;
- la figure 3 est une vue en coupe axiale partielle de la partie inférieure de deux inserts conformes à l'invention, reliés par un bracelet ;
- la figure 4 représente en perspective deux inserts noyés dans un bloc de liaison ;
- la figure 5 est une vue en coupe axiale de plusieurs inserts reliés entre eux par une plaque de liaison;
- la figure 5a est une vue en coupe axiale partielle montrant le détail A de la figure 5 ;
- la figure 6 est une vue en coupe axiale partielle de détail d'une plaque de liaison selon la ligne VI-VI de la figure 5, montrant un mode d'assujettissement de cette plaque sur les entretoises, et
- la figure 7 est une autre vue en coupe axiale partielle de détail montrant un mode de coincement de l'extrémité inférieure des inserts sur l'entretoise.

A la figure 2 on a référencé globalement en 8 un insert tubulaire constitué d'une armature tubulaire rigide extérieure 9, et d'un tube en matière synthétique 10. A ses extrémités ce tube présente un bourrelet circulaire 11, 12. Ainsi, après montage de l'insert 8 dans le passage 4, ces bourrelets sont comprimés respectivement entre les pièces 1 et 2 et l'extrémité correspondante de l'armature extérieure 9 lorsque l'entretoise 3 est serrée entre ces deux pièces.

A la figure 3 on a représenté une liaison possible entre deux inserts tubulaires 8a et 8b par un bracelet de matière synthétique 13 moulée d'une pièce avec les tubes de matière synthétique 10a et 10b revêtant intérieurement les armatures rigides 9a et 9b. On voit bien sur cette figure, d'autre part, la fonction d'étanchéité des bourrelets 12a et 12b, comprimés après montage entre la pièce 2 et les extrémités inférieures des armatures 9a et 9b, autour des orifices des canaux de circulation d'huile 6a et 6b de la pièce 2. Pour le logement des bracelets 13, il suffira de prévoir des rainures telles que 14 aux extrémités de l'entretoise 3.

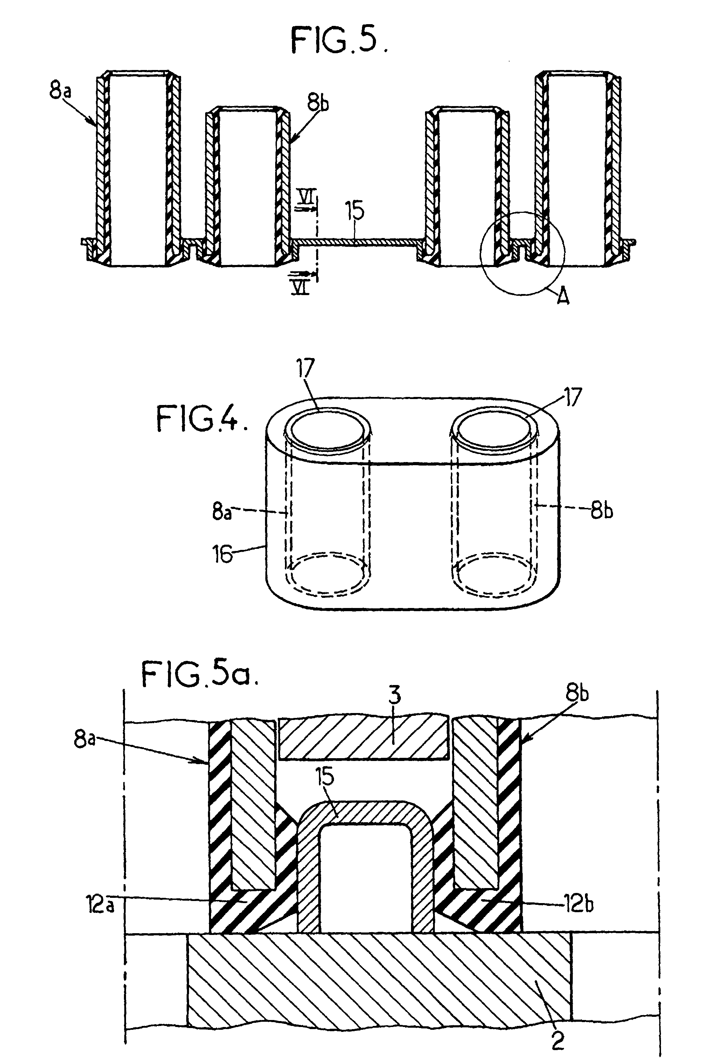

La figure 4 représente la variante évoquée plus haut, selon laquelle les inserts 8a, 8b sont noyés dans un bloc de caoutchouc ou de matière synthétique, référencé 16. En 17 sont référencés des bourrelets en dépassement sur les faces extrêmes du bloc 16 et ayant la même fonction que les bourrelets précités 11 et 12.

Dans le mode de réalisation de la figure 5, on a représenté une solidarisation entre différents inserts 8a, 8b... grâce à une plaque de liaison perforée 15, en métal ou en matière plastique souple ou rigide. Cette plaque pourrait éventuellement servir de distributeur amovible, jetable après montage ou récupérable, mais il sera avantageux de la constituer sous forme d'élément intégré à l'entretoise 3, destiné à rester à demeure après montage. Cela présente alors l'avantage que lors de la mise en compression axiale des inserts, et donc des bourrelets tels que 12a et 12b (voir détail de la figure 5a) la plaque 15 est repoussée par la pièce 2 et glisse sur les inserts, ce qui assure un maintien parfait de ces bourrelets. On élimine aussi tout risque d'extrusion des bourrelets, du fait du contact entre la pièce 2 et la plaque de liaison 15 (de même qu'à l'extrémité supérieure des entretoises).

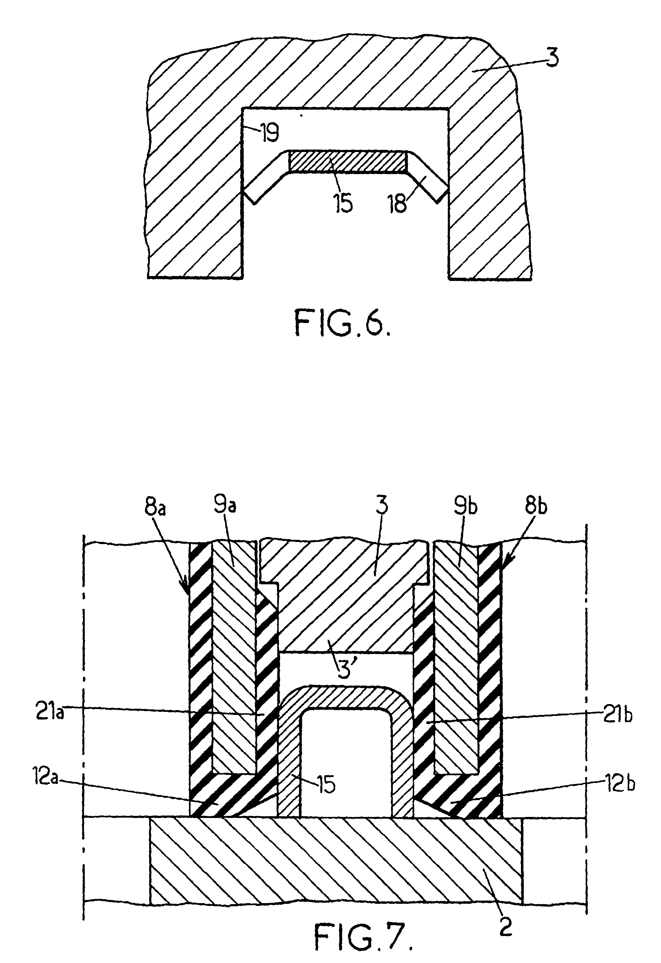

Dans le cas d'un montage avec déplacement vertical des pièces, il peut se faire que l'enlèvement de la pièce inférieure 2 autorise une chute des inserts tubulaires. Pour éviter ce risque on peut, comme représenté à la figure 6, mettre en oeuvre des griffes 18 sur la plaque de liaison 15, propres à s'agripper, par déformation élastique, sur les parois latérales de logements 19 ménagés dans l'entretroise 3.

A titre de variante, on peut aussi utiliser la solution illustrée à la figure 7. Dans ce cas, les bourrelets inférieurs 12a et 12b sont prolongés à l'extérieur des extrémités inférieures des armatures tubulaires 9a et 9b pour constituer des coussins de coincement 21a, 21b entre ces armatures et une saillie appropriée 3' de l'entretoise 3, ces coussins pouvant également exercer une force de serrage sur la plaque de liaison 15.

Ainsi on élimine tout risque de chute des inserts 8a, 8b... lors de l'extraction de la pièce 2.

Les exemples de réalisation montrent tous la mise en oeuvre d'une armature tubulaire 9 extérieure et d'un seul tube de caoutchouc 10 intérieur s'étendant d'une extrémité à l'autre de l'armature 9. Il serait toutefois possible de disposer le tube de caoutchouc 10 à l'extérieur de l'armature, pour une question de facilité de réalisation. De même, on pourrait envisager de supprimer la partie centrale du tube 10. Le tube 10 se présenterait alors sous l'aspect de deux tronçons extrêmes revêtant seulement les extrémités de l'armature tubulaire 9.

## Revendications

1. Dispositif de liaison étanche entre des canaux (5, 6) ménagés respectivement dans deux pièces (1, 2) en appui l'une sur l'autre par l'intermédiaire d'au moins une entretoise (3), cette entretoise étant traversée d'au moins un passage (4) de diamètre supérieur à celui des canaux et propre à mettre en communication un canal (5) d'une des pièces avec un canal (6) de l'autre pièce, aligné avec le précédent ou légèrement décalé par rapport à lui, ce dispositif comprenant en outre au moins un insert tubulaire (8) logé dans chaque passage d'entretoise, cet insert (8) comprenant une armature tubulaire rigide (9) de longueur légèrement inférieure à l'épaisseur de l'entretoise (3) au niveau du passage (4) concerné et un tube en caoutchouc ou matière synthétique élastique (10), revêtant au moins les extrémités de ladite armature (9) et présentant à ses deux extrémités un bourrelet (11, 12) recouvrant l'extrémité correspondante de cette armature, ce bourrelet pouvant ainsi être comprimé, lors du montage, de façon étanche, entre chaque extrémité de l'armature tubulaire (9) et la pièce correspondante (1 ou 2).

2. Dispositif selon la revendication 1, **caractérisé en ce que** ladite armature (9) est métallique.

3. Dispositif selon la revendication 1 ou 2, **caractérisé en ce que** ladite armature (9) est massive.

4. Dispositif selon la revendication 2, **caractérisé en ce que** ladite armature est réalisée sous la forme d'une tresse.

5. Dispositif selon la revendication 1, **caractérisé en ce que** ladite armature est réalisée sous la forme d'une tresse en fibres minérales ou synthétiques.

6. Dispositif selon l'une quelconque des revendications précédentes, **caractérisé en ce qu'**il comporte un certain nombre d'inserts tubulaires (8a, 8b) reliés entre eux par des bracelets (13).

7. Dispositif selon la revendication 6, **caractérisé en ce que** les bracelets (13) sont en caoutchouc ou matière synthétique élastique, et moulés d'une pièce avec le tube intérieur (10a, 10b) desdits inserts (8a, 8b).

8. Dispositif selon l'une quelconque des revendications 1 à 5,**caractérisé en ce que** lesdits inserts sont noyés dans un bloc de caoutchouc ou matière synthétique (16), leurs extrémités constituant des bourrelets (17) en dépassement sur la surface extrême correspondante dudit bloc.

9. Dispositif selon l'une quelconque des revendications 1 à 5, **caractérisé en ce qu'**il comporte un certain nombre d'inserts tubulaires (8a, 8b) reliés entre eux par une plaque de liaison perforée (15).

10. Dispositif selon la revendication 9, **caractérisé en ce que** ladite plaque de liaison (15) constitue un distributeur amovible, jetable ou récupérable.

11. Dispositif selon la revendication 9, **caractérisé en ce que** ladite plaque de liaison (15) constitue un élément intégré, destiné à rester logé à demeure dans ladite entretoise (3).

12. Dispositif selon la revendication 11, **caractérisé en ce que** ladite plaque de liaison (15) comporte des griffes (18) aptes à s'agripper par déformation élastique sur les parois latérales de logements (19) ménagés dans l'entretoise (3).

13. Dispositif selon la revendication 11, **caractérisé en ce que** lesdits bourrelets (12a, 12b) sont prolongés à l'extérieur des extrémités des armatures tubulaires (9a, 9b) par des coussins (21a, 21b) propres à être coincés entre ces armatures et une saillie appropriée (3') de l'entretoise (3).

14. Dispositif selon l'une quelconque des revendications précédentes, **caractérisé en ce que** ledit tube (10) revêt intérieurement ladite armature rigide (9).

15. Dispositif selon l'une quelconque des revendications précédentes, **caractérisé en ce que** ledit tube (10) est continu, d'une extrémité à l'autre de l'armature (9).

## Claims

1. A connecting device for making a sealed connection between channels (5, 6) which are made respectively in two components (1,2) bearing on each other via at least one spacer (3), passing through this spacer being at least one bore (4) having a diameter greater than that of the channels and adapted to bring a channel (5) in one of the components into communication with a channel (6) in the other component, this channel being aligned with the first one or slightly misaligned with respect to it, the device comprising moreover at least one tubular insert (8) disposed in each spacer bore, wherein the tubular insert comprises a rigid tubular armature (9) having a length slightly less than the thickness of the spacer (3) at the location of the concerned bore (4), and wherein it comprises at least one elastomeric tube (10) lining at least the ends of the said armature (9) and having at both its ends a rim (11, 12) covering the corresponding end of this armature (9), this rim thus being able to be compressed during the mounting, in a sealed manner between the tubular armature (9) and each corresponding component (1 or 2).

2. The device according to claim 1, wherein said armature (9) is made of a metal.

3. The device according to claim 1 or 2, wherein said armature is massive.

4. The device according to claim 2, wherein said armature (9) is made of a braid of fibers.

5. The device according to claim 2, wherein said armature (9) is made of a braid of mineral or synthetic fibers.

6. The device according to any one of preceding claims, comprising a plurality of tubular inserts (8a, 8b) connected together by bands (13).

7. The device according to claim 6, wherein the bands (13) are made of rubber or elastic synthetic material and are integrally molded with the internal elastomeric tube (10a, 10b) of the inserts (8a, 8b).

8. The device according to any one of claims 1 to 5, wherein said inserts are embedded in a block of rubber or synthetic material (16), their ends constituting said rims (17) extending beyond the corresponding outermost surface of said block.

9. The device according to any one of claims 1 to 5, comprising a plurality of tubular inserts (8a, 8b) connected together by a perforated connection plate (15).

10. The device of claim 9, wherein said connection plate (15) constitutes a removable distributor which is disposable or which can be recuperated.

11. The device of claim 9, wherein said connection plate (15) is an integral element designed to remain inside said spacer (3).

12. The device according to claim 11, wherein said connection plate (15) comprises clasps (18) that retain the inserts in the spacer, by deforming elastically, against the side walls of recesses (19) made in the spacer.

13. A device according to claim 11, wherein said rims (12a, 12b) are extended outside the ends of the tubular armatures (9a, 9b) by wedging cushions (21a, 21b) suitable for being wedged between these armatures and an appropriate extension (3') of the spacer (3).

14. The device according to any one of the preceding claims, wherein said elastomeric tube (10) lines said rigid armature (9) internally.

15. The device according to any one of the preceding claims, wherein said elastomeric tube portion (10) is continuous from one end of the armature (9) to the other.

## Patentansprüche

1. Dichtverbindimg zwischen Fluidbohrungen (5, 6), die in zwei Teilen (1 bzw. 2) vorgesehen sind, welche sich über mindestens ein Zwischenstück (3) in Anlage aneinander befinden, wobei durch dieses Zwischenstück mindestens ein Durchlass (4) verläuft, dessen Durchmesser größer ist als der der Fluidbohrungen, und der dazu geeignet ist, eine Fluidbohrung (5) des einen Teils mit einer Fluidbohrung (6) des anderen Teils in Verbindung zu setzen, wobei die eine mit der anderen fluchtet oder nur leicht versetzt zu ihr angeordnet ist, wobei diese Dichtverbindung ferner mindestens einen rohrförmigen Einsatz (8) aufweist, der in jedem Zwischenstückdurchlass gelagert ist, wobei dieser Einsatz (8) aus einer starren, rohrförmigen Halterung (9) besteht, deren Länge etwas geringer ist als die Stärke des Zwischenstücks (3) im Bereich des betreffenden Durchlasses (4), sowie aus einem Rohr aus Gummi oder elastischem Kunststoff(10), das zumindest die Enden dieser Halterung (9) ummantelt und an seinen beiden Enden einen Wulst (11, 12) aufweist, der das entsprechende Ende dieser Halterung umgibt, wobei dieser Wulst beim Einbau so zwischen jedem Ende der rohrförmigen Halterung (9) und dem entsprechenden Teil (1 oder 2) dicht zusammengedrückt werden kann.

2. Dichtverbindung nach Anspruch 1,
**dadurch gekennzeichnet,**
**dass** diese Halterung (9) aus Metall besteht.

3. Dichtverbindung nach Anspruch 1 oder 2,
**dadurch gekennzeichnet,**
**dass** diese Halterung (9) massiv ist.

4. Dichtverbindung nach Anspruch 2,
**dadurch gekennzeichnet,**
**dass** diese Halterung (9) in der Form eines Geflechts ausgeführt ist.

5. Dichtverbindung nach Anspruch 1,
**dadurch gekennzeichnet,**
**dass** diese Halterung (9) in der Form eines Geflechts aus Mineralfasern oder Kunstfasem ausgeführt ist.

6. Dichtverbindung nach einem der vorherigen Ansprüche,
**dadurch gekennzeichnet,**
**dass** sie eine bestimmte Anzahl rohrförmiger Einsätze (8a, 8b) aufweist, die untereinander durch Ringe (13) verbundes sind.

7. Dichtverbindung nach Anspruch 6,
**dadurch gekennzeichnet,**
**dass** die Ringe (13) aus Gummi oder elastischem Kunststoff bestehen und einstückig mit dem Innenrohr (10a, 10b) der Einsätze (8a, 8b) geformt sind.

8. Dichtverbindung nach einem der Ansprüche 1 bis 5,
**dadurch gekennzeichnet,**
**dass** die genannten Einsätze in einem Block aus Gummi oder elastischem Kunststoff (16) versenkt sind, wobei ihre Enden Wülste (17) bilden, die über die entsprechende Endfläche dieses Blocks hinausragen.

9. Dichtverbindung nach einem der Ansprüche 1 bis 5,
**dadurch gekennzeichnet,**
**dass** sie eine gewisse Anzahl rohrförmiger Einsätze (8a, 8b) aufweist, die untereinander durch eine perforierte Verbindungsplatte (15) verbunden sind.

10. Dichtverbindung nach Anspruch 9,
**dadurch gekennzeichnet,**
**dass** diese Verbindungsplatte (15) einen abnehmbaren wegwerfbaren oder wieder verwendbaren Verteiler bildet.

11. Dichtverbindung nach Anspruch 9,
**dadurch gekennzeichnet,**
**dass** diese Verbindungsplatte (15) ein integrierten Element bildet, das dazu vorgesehen ist, dauerhaft in dem Zwischenstück (3) aufgenommen zu bleiben.

12. Dichtverbindung nach Anspruch 11,
**dadurch gekennzeichnet,**
**dass** diese Verbindungsplatte (15) Klauen (18) aufweist, die geeignet sind, sich durch elastische Verformung an den Seitenwänden von Aufnahmen (19), die in dem Zwischenstück (3) ausgeführt sind, festzukrallen.

13. Dichtverbindung nach Anspruch 11,
**dadurch gekennzeichnet,**
**dass** die genannten Wülste (12a, 12b) außerhalb der Enden der rohrförmigen Halterungen (9a, 9b) durch Puffer (21a, 21b) verlängert werden, die geeignet sind, zwischen diese Halterungen und einen zweckdienlichen Vorsprung (3') des Zwischenstücks (3) geklemmt zu werden.

14. Dichtverbindung nach einem der vorherigen Ansprüche,
**dadurch gekennzeichnet,**
**dass** dieses Rohr (10) die starre Halterung (9) innen auskleidet.

15. Dichtverbindung nach einem der vorherigen Ansprüche,
**dadurch gekennzeichnet,**
**dass** dieses Rohr (10) von einem Ende der Halterung (9) zum anderen durchgehend ausgeführt ist.
